# EUROPÄISCHE PATENTSCHRIFT

(11) **EP 0 347 675 B1**
(45) Veröffentlichungstag und Bekanntmachung des Hinweises auf die Patenterteilung: **01.09.1993**
(21) Anmeldenummer: 89110520.7
(22) Anmeldetag: 10.06.1989
(51) Int. Cl.: F16K 47/02, A61M 16/00, F16K 7/16

(54) **Schwingungsarmes Strömungsventil**
Oscillation reduced flow valve
Soupape d'écoulement à oscillation amortie

(30) Priorität: 21.06.1988 DE 3820842
(43) Veröffentlichungstag der Anmeldung: 27.12.1989
(73) Patentinhaber: Drägerwerk Aktiengesellschaft, 23542 Lübeck (DE)
(72) Erfinder: Frank, Helge, D-2400 Lübeck (DE); Eifrig, Reinhard, D-2400 Lübeck (DE)

(56) Entgegenhaltungen:
- CH-A- 571 673
- DE-A- 3 106 377
- FR-A- 2 386 315
- US-A- 4 190 045

## Beschreibung

Die Erfindung betrifft ein Ventil in einer Strömungsleitung für ein Fluid gemäß den Merkmalen im Oberbegriff von Anspruch 1.

Ein derartiges Ventil ist aus der US-A-4 190 045 bekanntgeworden.

Die bekannten Ventile dienen z. B. dazu, als Exspirationsventil in der Atemgasleitung eines Beatmungsgerätes die Strömung des Atemgases zu unterbrechen bzw. an das Beatmungsgerät freizugeben. Das Schließelement des Ventils wird entweder mechanisch oder durch einen im Ventilgehäuse aufgebrachten Steuerdruck in vorgebbaren Zeitabständen von seinem Ventilsitz freigegeben oder wieder auf ihn gesetzt. Während des Abhebens vom Ventilsitz und auch beim Wiederaufsetzen verändert sich der Durchflußspalt zwischen Schließelement und Ventilsitz, so daß eine mehr oder weniger starke Strömung durch den Durchflußspalt entsteht. Diese Strömung erzeugt Verwirbelungen an den Sitzkanten oder Schwingungsresonanzen an dem Schließelement, welches in der Regel als eine Ventilplatte ausgebildet ist. Die Schwingungen äußern sich in störenden Geräuschen, die sich in Lautstärke und Frequenz während des Schließ- bzw. Öffnungsvorganges durch die Eigenschaft des Ventilgehäuses und der sich anschließenden Gasströmungsleitungen als Resonanzkörper noch verstärken.

Um diese unerwünschten Schwingungserscheinungen zu verringern, besitzt das bekannte Plattenventil einen kegelstumpfförmigen Massenträger, der eine zentrale Anschlußverbindung in Form eines kurzen Stieles besitzt, an welchem die freischwingende Ventilplatte angesetzt ist. Im geschlossenen Zustand sitzt die Ventilplatte auf dem Sitz fest auf. Beim Öffnen des Ventils heben sich die Randbereiche der Ventilplatte von dem Ventilsitz ab und geben den Strömungsweg über einen engen Strömungsspalt frei. Die während der Strömung entstehenden Schwingungen werden in ihrem höherfrequenten Anteil durch die Flatterbewegungen des Plattenventils gedämpft, wobei der kegelstumpfförmige Massenträger die niederfrequenten Schwingungen durch seine schwingungsdämpfende Aufhängung an dem Ventilgehäuse mittels des biegsamen Fortsatzes verhindert.

Bei der bekannten Ventilanordnung ist es jedoch von Nachteil, daß die Schwingungsdämpfung in zwei voneinander getrennten Frequenzbereichen stattfindet, nämlich die Dämpfung der höherfrequenten Schwingungen durch die schwingende Ventiltellermembran und die der niederfrequenten Schwingungen durch den konisch geformten Massenträger. Es ist schwierig, die Dämpfungseigenschaften beider Schwingungskörper so aufeinander abzustimmen, daß das gesamte Schwingungsspektrum in dem interessierenden Bereich gleichmäßig gedämpft wird. In der Übergangszone zwischen niederfrequenter und hochfrequenter Dämpfung besteht eine mehr oder weniger tiefe Lücke, in welcher die Dämpfungseigenschaften des Ventilkörpers ungünstig sind, so daß trotz alledem eine hörbare Resonanz entsteht.

Der vorliegenden Erfindung liegt somit die Aufgabe zugrunde, ein Plattenventil der genannten Art so zu verbessern, daß die Schwingungserzeugung des Schließelementes weiter vermindert wird und die Dämpfungseigenschaften lückenlos in dem gesamten interessierenden Frequenzspektrum wirksam werden .

Die Lösung der Aufgabe erfolgt dadurch, daß die Anschlußverbindung als ein an dem Randumfang des Schließelementes befestigter und mit dem Massenträger verbundener biegsamer Kragen ausgebildet ist.

Die Vorteile der Erfindung liegen im wesentlichen darin, daß das Schließelement nunmehr als ein schwingender Zweimassenkörper derart ausgebildet ist, daß die Schwingungsenergie des Schließelementes durch seine elastische Kopplung an den Massenträger von diesem übernommen und gedämpft wird. Somit wird die Erzeugung von Resonanzschwingungen bei ihrer Entstehung verhindert, wobei eine Abstimmung zwischen den beiden schwingenden Massen auf einfache Art so festgelegt werden kann, daß die Resonanzfrequenz des Zweimassensystems im nicht hörbaren Bereich liegt.

Um den Anteil der höherfrequenten Schwingungen noch weiter zu dämpfen, ist es vorteilhaft, den Kragen aus einer Folge mehrerer stegförmiger Streifen zwischen dem Schließelement und dem Massenträger auszubilden.

Eine Verbesserung der niederfrequenten Dämpfung wird dadurch erreicht, daß der Kragen und der Fortsatz eine zusammenhängende Wulst bilden.

Es ist zweckmäßig, den Massenträger als eine mit einem Beschwerer ausgestattete Platte auszubilden, so daß der Massenträger mit dem Schließelement und dem Kragen einen umschlossenen Membranraum bildet. Auf diese Weise erhält man eine gute Kopplung zwischen Schließelement und Massenträger, wodurch einerseits große Schwingungsamplituden gedämpft werden können, andererseits die mechanische Schwingungsentkopplung zwischen Schließelement und Massenträger verbessert wird. Dabei kann der Beschwerer aus einer in die Platte eingeknöpften Metallscheibe bestehen. Sowohl die Platte als auch der Wulst und das Schließelement sowie die zugehörige Anschlußverbindung können aus einem Stück gefertigt sein, wobei sich als Material Silikonkautschuk anbietet, welches besondere Vorteile gegenüber einer Sterilisation hat.

Um die Steifigkeit des schwingenden Zweimassensystems, bedingt durch den geschlossenen Membranraum, zu verringern, ist es zweckmäßig, den Membranraum mit einer Öffnung zur Steuerkammer hin zu versehen. Die in der Membrankammer eingeschlossene Luft kann bei Bewegungen der Wandteile verdrängt werden und verringert somit die Steifigkeit des Schwingungssystems. Soll die Schließkraft durch ein Steuergas im Steuerraum bewirkt werden, so findet über die Öffnung gleichzeitig ein Druckausgleich zwischen Steuerkammer und Membranraum statt.

Wird der auf das Schließelement auszuübende Schließdruck durch eine Feder oder einen mittels einer Tauchspule bewegbaren Stößel ausgeführt, ist es zweckmäßig, den Massenträger mit einem Durchbruch zu versehen, durch welchen der Stößel als Druckelement geführt ist. Der Schließdruck kann dann direkt auf das Schließelement wirken, so daß die zu dämpfende Masse verringert wird, weil der Massenträger nicht unter der Druckkraft steht. Er kann dadurch die zu dämpfenden Schwingungen ungestört aufnehmen.

Um den veränderbaren Betriebsdruck zur Herstellung der Schließkraft für das Schließelement in die Steuerkammer zu führen, ist an ihr ein entsprechender Anschluß vorgesehen.

Ein Ausführungsbeispiel der Erfindung wird anhand der schematischen Zeichnung dargestellt und im folgenden näher erläutert.

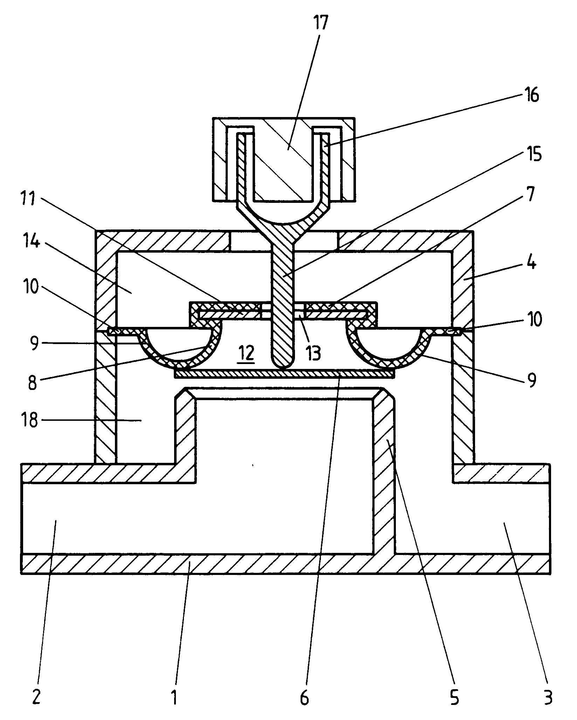

In der einzigen Figur ist eine Strömungsleitung (1) mit einem Einlaß (2) und einem Auslaß (3) sowie einem Ventilgehäuse (4) dargestellt. Das Ventilgehäuse (4) enthält einen Sitz (5) für ein tellerförmiges Schließelement (Ventilteller 6). Das Schließelement (6) ist einerseits mit einem Massenträger (7) über einen biegsamen Kragen (8) und andererseits an das Ventilgehäuse (4) über einen biegsamen Fortsatz (9) verbunden. Massenträger (7) und Schließelement (6) bilden über die Kopplung mit dem Kragen (8) und dem Fortsatz (9) ein schwingungsfähiges Zweimassensystem, wobei der Massenträger (7) nicht direkt, sondern über den Kragen (8), die Verbindungsstelle zwischen Kragen 8) und Schließelement (6) und über den Fortsatz (9) an das Ventilgehäuse (4) befestigt ist. Kragen (8) und Fortsatz (9) sind zu einem zusammenhängenden Wulst vereint, der im Ventilgehäuse (4) mit einer Verstärkung (10) festgehalten ist. Der Massenträger 7) umgreift einen plattenförmigen Beschwerer (11). Massenträger (7), Kragen (8) und Schließelement (6) umgeben einen Membranraum (12), welcher über eine Öffnung (13) mit einem Steuerraum (14) verbunden ist. Die Öffnung (13) dient als Durchbruch für einen Stößel (15), der sich außerhalb des Ventilgehäuses (4) zu einer Tauchspule (16) verlängert, welche in einem Spulenkern (17) aufgenommen ist. Durch den Anschluß der Tauchspule (16) an ein nicht dargestelltes Steuergerät ist der Spulenstrom derart einstellbar, daß über den Stößel (15) eine vorgebbare Druckkraft gegen das Schließelement in Schließrichtung ausgeübt wird.

In der dargestellten Ausführungsform befindet sich das Ventil in geöffnetem Zustand. Der Strömungsdruck des durch den Einlaß (2) strömenden Fluids hebt den Ventilteller (6) als Schließelement unter Überwindung der durch den Stößel (15) und die Tauchspule (16) ausgeübten Schließkraft an. Hierbei eventuell auftretende Schwingungen an dem Ventilteller (6) werden durch den Kragen (8) an den Massenträger (7) weitergeleitet und gedämpft. Das Fluid kann aus dem Sitz in die Strömungskammer (18) und von dort zum Auslaß (3) gelangen. Bei abnehmendem Strömungsdruck des Fluids wird der Ventilteller (6) infolge der über den Stößel (15) auf ihn wirkenden Schließkraft geschlossen. Auch die während des Schließvorganges auftretenden, durch die Strömung im Öffnungsspalt zwischen Sitz (5) und Ventilteller (6) erzeugten Schwingungserscheinungen werden durch das Zweimassensystem Ventilteller (6) und Massenträger (7) gedämpft.

## Patentansprüche

1. Ventil in einer Strömungsleitung (1) für ein Fluid, mit einem gegen einen Sitz (5) betätigbaren Schließelement (6), wobei dieses Schließelement (6) über eine Anschlußverbindung (8) an einen Massenträger (7) angekoppelt ist und wobei die dadurch gebildete Bauteilgruppe (bestehend aus Schließelement (6), Anschlußverbindung (8) und Massenträger (7)) mit dem Ventilgehäuse (4) über ein flexibles Wandelement in Form eines Fortsatzes (9) verbunden ist, wodurch das Ventilgehäuse (4) in eine Strömungskammer (18) und in eine Steuerkammer (14) unterteilt wird, dadurch gekennzeichnet, daß die Anschlußverbindung als ein am Randumfang des Schließelementes (6) befestigter und mit dem Massenträger (7) verbundener biegsamer Kragen (8) ausgebildet ist.

2. Ventil nach Anspruch 1, dadurch gekennzeichnet, daß der Kragen (8) aus einer Folge mehrerer Streifen besteht, die den Massenträger (7) und das Schließelement (6) stegförmig verbinden.

3. Ventil nach Anspruch 1 oder 2, dadurch gekennzeichnet, daß der Fortsatz (9) und der Kragen (8) eine zusammenhängende Wulst bilden.

4. Ventil nach einem der Ansprüche 1 bis 3, dadurch gekennzeichnet, daß der Massenträger als eine mit einem Beschwerer (11) ausgestattete Platte (7) ausgebildet ist, der mit dem Schließelement (6) und dem Kragen (8) einen umschlossenen Membranraum (12) bilden.

5. Ventil nach Anspruch 4, dadurch gekennzeichnet, daß der Membranraum (12) mit einer Öffnung (13) zur Steuerkammer (14) hin versehen ist.

6. Ventil nach einem der Ansprüche 1 bis 5, dadurch gekennzeichnet, daß der Massenträger (7) einen Durchbruch als Öffnung (13) aufweist, durch den ein in seiner Schließkraft einstellbares, zwischen dem Ventilgehäuse (4) und dem Schließelement (6) in Schließrichtung wirkendes Druckelement (15) geführt ist.

7. Ventil nach Anspruch 6, dadurch gekennzeichnet, daß das Druckelement ein durch eine Tauchspulenanordnung (16, 17) betätigbarer Stößel (15) ist.

## Claims

1. Valve in a flow line (1) for a fluid, having a closing element (6) which can be actuated towards a seat (5), with this closing element (6) being coupled by way of a joining connection (8) to a mass carrier (7) and with the assembly group thereby formed (consisting of closing element (6), joining connection (8) and mass carrier (7)) being connected with the valve housing (4) by way of a flexible wall element in the form of an extension (9), whereby the valve housing (4) is subdivided into a flow chamber (18) and into a control chamber (14), characterised in that the joining connection is formed as a flexible collar (8) which is secured to the peripheral edge of the closing element (6) and which is connected with the mass carrier (7).

2. Valve according to claim 1, characterised in that the collar (8) consists of a series of several strips which connect the mass carrier (7) and the closing element (6) in a web-like manner.

3. Valve according to claim 1 or 2, characterised in that the extension (9) and the collar (8) form a coherent bead.

4. Valve according to one of the claims 1 to 3, characterised in that the mass carrier is formed as a plate (7) which is provided with a weight (11), forming with the closing element (6) and the collar (8) an enclosed membrane chamber (12).

5. Valve according to claim 4, characterised in that the membrane chamber (12) is provided with an opening (13) towards the control chamber (14).

6. Valve according to one of the claims 1 to 5, characterised in that the mass carrier (7) has a break-through as an opening (13) through which is guided a pressure element (15) which can be adjusted in terms of its closing force and which acts between the valve housing (4) and the closing element (6) in the closing direction.

7. Valve according to claim 6, characterised in that the pressure element is a ram (15) which can be actuated by means of a plunger coil arrangement (16, 17).

## Revendications

1. Soupape disposée dans une conduite d'écoulement (1) destinée à un fluide, pourvue d'un élément de fermeture (6) pouvant être actionné contre un siège (5), cet élément de fermeture (6) étant accouplé à un élément porteur de poids (7) par l'intermédiaire d'une liaison de raccordement (8) et le groupe de composants ainsi formé (comprenant l'élément de fermeture (6), la liaison de raccordement (8) et l'élément porteur de poids (7)) étant relié à la cage de soupape (4) par l'intermédiaire d'un élément de paroi flexible se présentant sous la forme d'un prolongement, ce qui divise la cage de soupape (4) en une chambre d'écoulement (18) et en une chambre de commande (14), caractérisée en ce que la liaison de raccordement est conformée en collerette souple (8) fixée sur le bord de l'élément de fermeture (6) et reliée à l'élément porteur de poids (7).

2. Soupape selon la revendication 1, caractérisée en ce que la collerette (8) est constituée d'une série de plusieurs bandes reliant, sous forme de nervures, l'élément porteur de poids (7) et l'élément de fermeture (6).

3. Soupape selon la revendication 1 ou 2, caractérisée en ce que le prolongement (9) et la collerette (8) forment un bourrelet continu.

4. Soupape selon l'une des revendications 1 à 3, caractérisée en ce que l'élément porteur de poids est conformé en plaque (7) pourvue d'une charge (11) et formant, avec l'élément de fermeture (6) et la collerette (8), un espace de membrane (12) fermé.

5. Soupape selon la revendication 4, caractérisée en ce que l'espace de membrane (12) est pourvu d'une ouverture (13) orientée en direction de la chambre de commande (14).

6. Soupape selon l'une des revendications 1 à 5, caractérisée en ce que l'élément porteur de poids (7) présente un perçage servant d'ouverture (13), que traverse un élément de pression (15), dont la force de fermeture est réglable et qui agit, dans la direction de fermeture, entre la cage de soupape (4) et l'élément de fermeture (6).

7. Soupape selon la revendication 6, caractérisée en ce que l'élément exerçant une pression est un poussoir (15) actionné grâce à un dispositif à bobine (16, 17).
